# EUROPÄISCHE PATENTSCHRIFT

(11) **EP 0 936 763 B1**
(45) Veröffentlichungstag und Bekanntmachung des Hinweises auf die Patenterteilung: **15.09.2010**
(21) Anmeldenummer: 99102114.8
(22) Anmeldetag: 03.02.1999
(51) Int. Cl.: H04H 20/63, H04H 40/90

(54) **Schalteinrichtung für den Satellitenempfang**
Switching means for satellite broadcast reception
Dispositif de commutation pour la réception de programmes de télédiffusion par satéllite

(30) Priorität: 12.02.1998 DE 19805603
(43) Veröffentlichungstag der Anmeldung: 18.08.1999
(73) Patentinhaber: ASC-TEC AG Antennen-Satelliten-Communication-Technik, 78351 Bodman (DE)
(72) Erfinder: Boll, Christian, 78333 Stockach (DE); Grömminger, Fredi, 78333 Stockach (DE)
(74) Vertreter: Weiss, Peter

(56) Entgegenhaltungen:
- EP-A- 0 521 732
- DE-A- 4 243 967
- DE-A- 19 728 623
- JP-A- 03 240 322
- FABIAN R: "MARKTUBERSICHT: MULTISCHALTER TEIL 1" RADIO FERNSEHEN ELEKTRONIK,DE,VEB VERLAG TECHNIK. BERLIN, Bd. 44, Nr. 11, 1. November 1995 (1995-11-01), Seiten 30-39, XP000547886 ISSN: 1436-1574
- SCHMEDT K: "UMRUESTEN AUF DIGITAL" RADIO FERNSEHEN ELEKTRONIK,DE,VEB VERLAG TECHNIK. BERLIN, Bd. 45, Nr. 8, 1. August 1996 (1996-08-01), Seiten 28-29, XP000623890 ISSN: 1436-1574

## Beschreibung

Die Erfindung betrifft eine Schalteinrichtung für den Satellitenempfang gemäß dem Oberbegriff des Anspruchs 1.

In der Satellitenverteiltechnik werden Schalteinrichtungen verwendet, die auch als Multischalter bezeichnet werden, um die ZF-Signale, die von einer Satellitenempfangsanlage empfangen werden, auf mehrere Empfangsgeräte bzw. Teilnehmer zu verteilen. Diese Schalteinrichtungen sind oftmals mit einem stationären Netzteil zur Eigenstromversorgung und zur Versorgung der angeschlossenen LNB-Einheiten ausgerüstet. In Abhängigkeit von der Anzahl der Eingänge der Schalteinrichtung kann eine entsprechende Anzahl von LNB, welche den gewünschten Satelliten empfangen, angeschlossen werden. Die angeschlossenen Teilnehmer, deren Anzahl von der Anzahl der Ausgänge der Schalteinrichtung begrenzt wird, können auf die Eingänge der Schalteinrichtung über steuerbare Umschalter zugreifen und so die entsprechende Polarisationsebene bzw. den gewünschten Satelliten empfangen. Die bekannten Schalteinrichtungen haben den Nachteil, daß immer alle angeschlossenen LNB mit Strom versorgt werden, egal ob nur ein LNB oder mehrere von den Teilnehmern angewählt sind. Dadurch tritt ein hoher Stromverbrauch in der Empfangsanlage auf, auch wenn z. B. alle Teilnehmer abgeschaltet haben oder alle Teilnehmer auf nur ein LNB zugreifen.

Die EP 0 521 732 A2 offenbart ein Antennensystem zum Empfangen von Rundfunk- oder Kommunikationssignalen von einem Satelliten, wobei entsprechende Empfänger vorgesehen sind, die entsprechende Steuerimpulse zu seinem Umschaltverteiler liefern, um jeweils eine der mehreren Antennen auszuwählen, wobei mehrere Empfänger vorgesehen sind, die jeweils eine Gleichspannung über entsprechende Umschaltverteiler an mehrere Umsetzer anlegen.

Die DE 41 24 720 A1 beschreibt eine Umschaltvorrichtung für Signale hoher Frequenzen, bei welcher entsprechend den Anschlusszuständen an den jeweiligen Ausgangsanschlüssen eine verbraucherabhängig gesteuerte Ansteuerungsschaltung zum Betrieb der jeweils benötigten Schalter/Verstärker vorgesehen ist.

Der Erfindung liegt die Aufgabe zugrunde, eine Schalteinrichtung für den Satellitenempfang zu schaffen, die eine Abschaltung der von den angeschlossenen Teilnehmern nicht ausgewählten LNB ermöglicht.

Die Lösung dieser Aufgabe erhält man durch die im Anspruch 1 angegebenen Merkmale. Jedem LNB ist ein steuerbarer Schalter zugeordnet, der es ermöglicht, die Betriebsspannung von den LNB abzuschalten, die von keinem der angeschlossenen Teilnehmer ausgewählt sind. Dadurch wird es vermieden, daß nicht ausgewählte LNB unnötig mit Strom versorgt werden, wodurch sich eine erhebliche Energieeinsparung ergibt.

Die den LNB zugeordneten Schalter können über eine von dem Empfangsgerät des jeweiligen Teilnehmers kommende Steuerspannung geschlossen werden, so daß dadurch das ausgewählte LNB über die zu ihm führenden Signalleitung mit Strom versorgt wird. Als Steuerspannung kann dabei eine vom Empfangsgerät abgegebene Gleichspannung dienen. Mittels eines Kondensators läßt sich diese Gleichspannung sehr einfach von dem hochfrequenten Nutzsignal entkoppeln.

Die den LNB zugeordneten Schalter können aber auch von einer Auswerteeinrichtung betätigt werden, die die jeweilige Stellung der Umschalter erkennt und daraufhin den zu den gewünschten LNB führenden Pfad durch Betätigung der Schalter freischaltet.

Die Abschaltung der LNB, die von keinem der Teilnehmer angewählt sind, erfolgt automatisch. Die Abschaltung der Versorgungsgleichspannung für die LNB kann in Schalteinrichtungen von Antennenanlagen eingesetzt werden. Die Anzahl der verwendeten LNB und die der angeschlossenen Teilnehmer ist dabei grundsätzlich unbegrenzt.

Besonders vorteilhaft ist es die Schalteinrichtung zusätzlich mit einer den Schaltzustand anzeigenden Anzeigeneinrichtung zu versehen. Die Anzeigeneinrichtung kann dabei so ausgebildet sein, daß jedem LNB eine Anzeige zugeordnet ist, die anzeigt, ob an dem jeweiligen LNB die Betriebsspannung anliegt. Als Anzeige kann dabei eine einfache Leuchtdiode verwendet werden.

Eine den Schaltzustand anzeigende Anzeigeeinrichtung hat für Servicezwecke den Vorteil, daß auf einfache Weise die Funktion der Schalteinrichtung überprüft werden kann.

Die Anzeigeneinrichtung kann dabei auch so ausgebildet sein, daß jedem Umschalter eine Anzeige zugeordnet ist, die das durch die Schalterstellung des Umschalters mit dem Umschalter verbundene LNB anzeigt. In einfacher Form kann dies dadurch erfolgen, daß jedem Umschalter mehrere Leuchtdioden zugeordnet sind, deren Anzahl mit der Anzahl der LNB übereinstimmt. Greift ein Teilnehmer auf ein LNB zu, so leuchtet an dem Umschalter, an dem dieser Teilnehmer mit der Schalteinrichtung verbunden ist, die dem ausgewählten LNB entsprechende Leuchtdiode auf. Durch Anwählen sämtlicher LNB läßt sich auch hier sehr einfach eine Funktionsprüfung an der Schalteinrichtung durchführen.

Eine andere, ebenfalls sehr vorteilhafte Ausführung sieht vor, daß jedem LNB eine Anzeige zugeordnet ist, die anzeigt, welche Empfangsgeräte auf das jeweilige LNB zugreifen.

Die den Schaltzustand angebenden Anzeigeneinrichtungen sind gerade beim Empfang von digitalen TV-Signalen, die über die Schalteinrichtung verteilt werden, vorteilhaft, da der Installateur diese Signale mit seinem Meßgerät bei herkömmlichen Schalteinrichtungen oft nicht überprüfen kann. Außerdem erkennt der Anwender die Zuordnung der von den Teilnehmern abgegebenen Schaltsignalen zu den entsprechenden, für die LNB vorgesehenen Eingänge.

Auch zur Kontrolle von DiSEqC-Umschaltsignalen (Digital Satellite Equipment Control) eignet sich die Anzeigeeinrichtung hervorragend, da der Installateur direkt überprüfen kann, ob ein von einem Empfänger R abgegebenes DiSEqC-Komando auch den richtigen Schaltvorgang am Multischalter auslöst.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1: eine Schalteinrichtung zur Anschaltung von LNB an mehrere Teilnehmer, die eine Abschaltung der nicht angewählten LNB ermöglicht,
- Fig. 2: eine Schalteinrichtung mit einer Anzeigeneinrichtung zur Anzeige der von den Teilnehmern ausgewählten LNB, und
- Fig. 3: eine Schalteinrichtung mit einer den LNB zugeordneten Anzeigeneinrichtung, die die jeweils an den LNB angeschalteten Teilnehmer anzeigt;
- Fig. 4: eine weitere Schalteinrichtung als weiteres Ausführungsbeispiel gemäss Fig. 3.

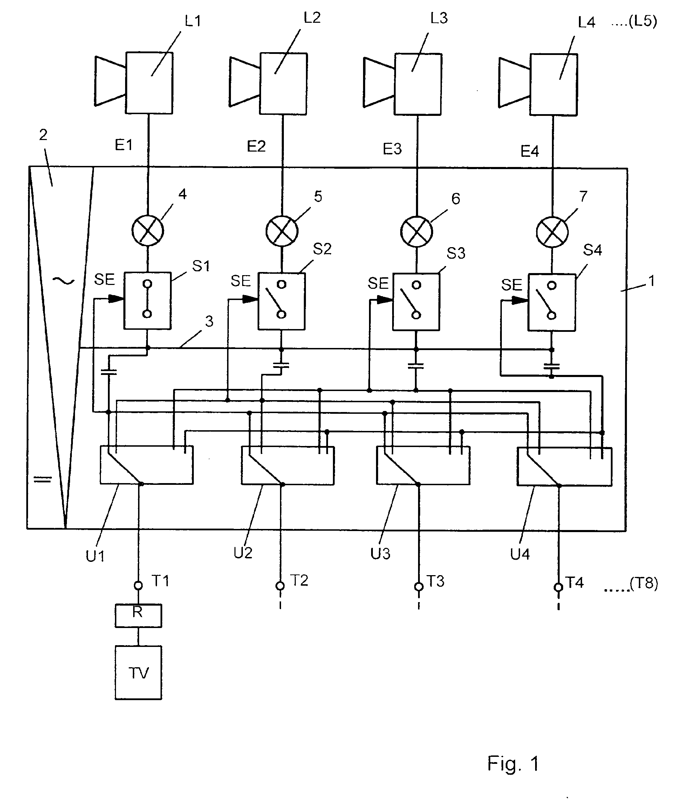

Die in Figur 1 dargestellte Schalteinrichtung 1 ist eingangsseitig mit vier LNB L1 bis L4 verbunden, deren Satelliten-ZF-Signale über die Schalteinrichtung 1 zu mehreren Teilnehmern T1 bis T4 übertragen werden können. Die Anzahl der Teilnehmer ist dabei nicht auf die hier zeichnerisch dargestellten vier beschränkt, weshalb mit (T8) angedeutet wird, daß hier auch beispielsweise acht Teilnehmer angeschlossen sein können. Ferner soll auch eingangsseitig daran gedacht sein weitere LNB vorzusehen. Darauf soll das vorliegende Ausführungsbeispiel nicht beschränkt sein.

Jeder Teilnehmer besitzt einen Empfänger R und ein Fernsehgerät TV, die ausgangsseitig an der Schalteinrichtung 1 jeweils an einem zugehörigen Umschalter U1 bis U4 angeschlossen sind. Die Umschalter U1 bis U4 besitzen eine der Anzahl der LNB entsprechende Anzahl von Schaltkontakten, wobei die Schaltkontakte sämtlicher Umschalter, die zu dem selben LNB führen, miteinander gekoppelt sind.

Zwischen jedem Eingang E1 bis E4, an denen jeweils ein LNB angeschlossen ist, und dem entsprechenden Schaltkontakt der Umschalter U1 bis U4 ist jeweils ein steuerbarer Schalter S1 bis S4 eingesetzt, der in der offenen Stellung die Betriebsspannung von dem jeweiligen LNB abschaltet. Im dargestellten Ausführungsbeispiel wird angenommen, daß sämtliche Teilnehmer nur auf L1 zugreifen, weshalb hier auch nur der Schalter S1 sich in der geschlossenen Stellung befindet.

Die Steuerung der Schalter S1 bis S4 erfolgt über eine vom Empfänger R zur Schalteinrichtung 1 übertragene Gleichspannung, die immer dann am jeweiligen Steuereingang SE eines Schalters anliegt, wenn einer oder mehrere der Umschalter U1 bis U4 auf das entsprechende LNB (L1 bis L4) zugreifen. Im dargestellten Ausführungsbeispiel wird über die Umschalter die zur Betätigung des Schalters S1 erforderliche Gleichspannung an dessen Steuereingang SE angelegt. An den anderen Schaltern S2 bis S4 liegt keine entsprechende Gleichspannung an deren Steuereingängen an.

Die Versorgungsspannung für die LNB L1 bis L4 wird von einem Netzteil 2 erzeugt und über eine Leitung 3 eingespeißt.

Die in Figur 1 dargestellte Schalteinrichtung besitzt außerdem eine Anzeigeneinrichtung in Form von Leuchtdioden 4 bis 7, die eingeschaltet sind, wenn das entsprechende LNB mit der Betriebsspannung versorgt wird, oder die Schaltereinrichtung U1 bis U4 ein entsprechendes Signal abgibt.

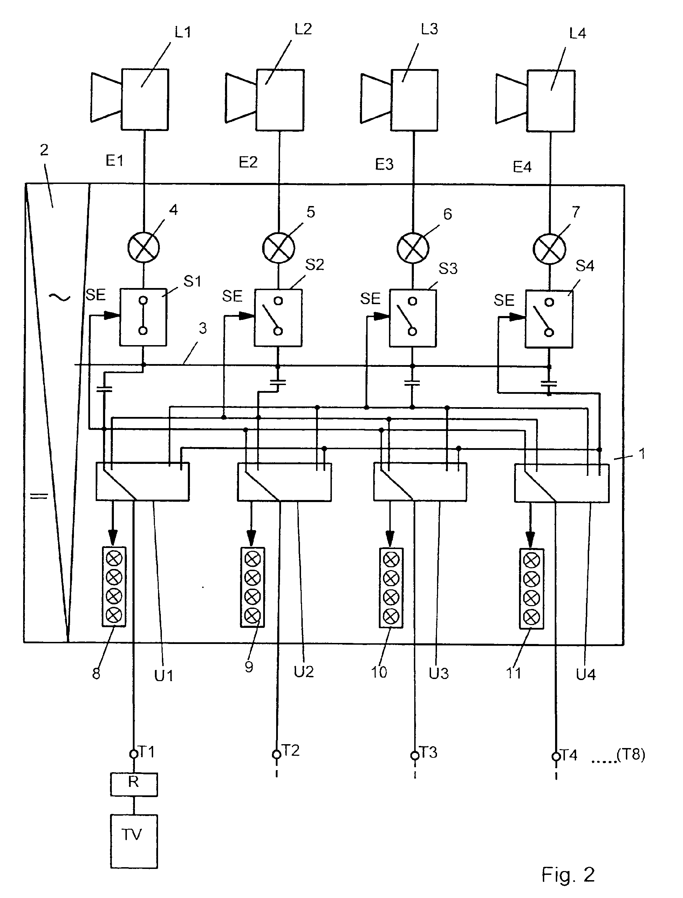

In Figur 2 ist die Schalteinrichtung 1 mit einer Anzeigeneinrichtung ausgestattet, die an die Umschalter U1 bis U4 angeschlossen ist. Jedem Umschalter sind mehrere Leuchtdioden 8 bis 11 zugeordnet, die anzeigen, welche LNB von den L1 bis L4 über den jeweiligen Umschalter ausgewählt ist. Die Leuchtdioden 8 sind zu diesem Zweck jeweils einem Schaltkontakt des Umschalters U1 zugeordnet. In entsprechender Weise ist dies bei den Leuchtdioden 9 bis 11 der Fall.

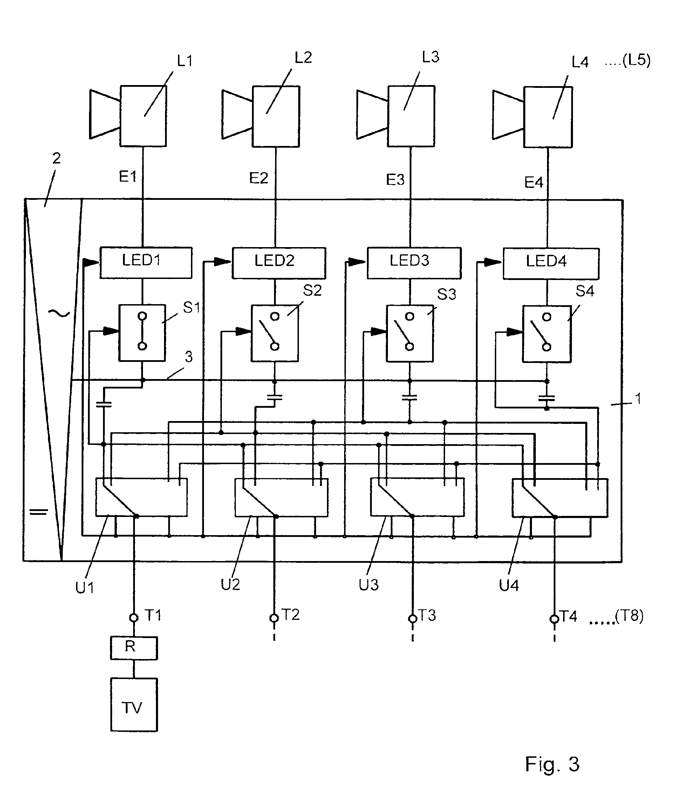

Figur 3 zeigt nun eine Ausführung mit einer Anzeigeneinrichtung, deren Anzeigenelemente LED1 bis LED4 jeweils einem Eingang E1 bis E4 der Schalteinrichtung 1 zugeordnet sind. Mit dieser Form der Anzeigeneinrichtung läßt sich zugeordnet zu jedem LNB anzeigen, welcher oder welche der Teilnehmer 1 bis T4 gerade auf ein bestimmtes LNB zugreifen. Die Anzeigeneinrichtung ist daher hier mit sämtlichen Umschaltern U1 bis U4 verbunden, um die Schaltzustände sämtlicher Umschalter erkennen zu können.

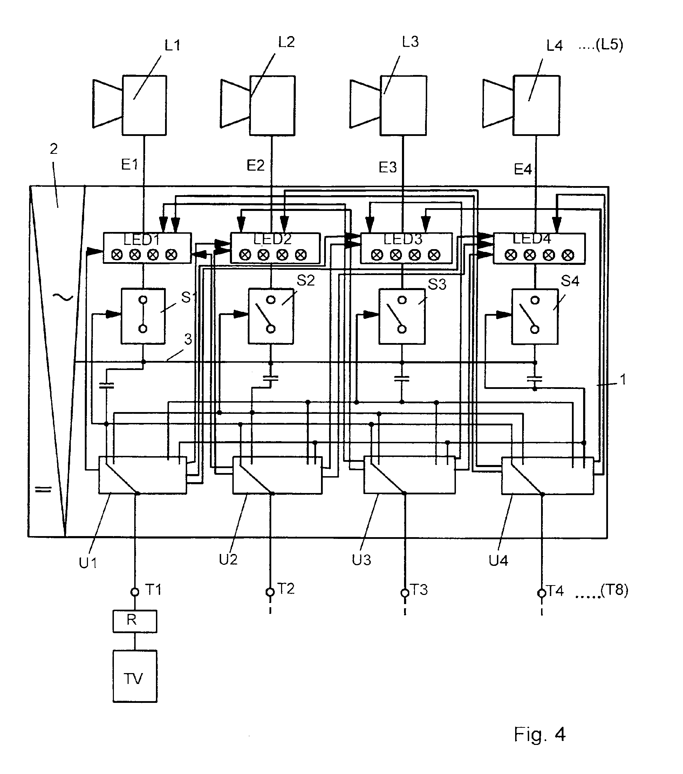

In einem weiteren bevorzugten Ausführungsbeispiel gemäss Fig. 4 ist eine Anzeigeeinrichtung vorgesehen, deren Anzeigenelemente LED1 bis LED4 jeweils mit sämtlichen Umschaltern U1 bis U4 verbunden sind. Die Anzahl der in den jeweiligen Anzeigeelemente vorgesehenen Leuchtdioden entspricht der Anzahl der Teilnehmer T1 bis T4. Ist eine grössere Anzahl an Teilnehmern vorgesehen bzw. angeschlossen, so erhöht sich entsprechend die Anzahl der Leuchtdioden in den Anzeigeelementen LED1 bis LED4.

Hierdurch kann an jedem Eingang E1 bis E4 separat angezeigt werden, welcher Teilnehmer T1 bis T4 gerade auf welchem Eingang E1 bis E4 zugreift und in welcher Schalterstellung sich die Umschalter U1 bis U4 jeweils befinden.

## Patentansprüche

1. Schalteinrichtung für den Satellitenempfang zur Verteilung der mittels mehrerer LNB empfangenen ZF-Signale an Empfangsgeräte (R) mehrerer Teilnehmer (T1 bis T4), bei der die Empfangsgeräte (R) an jeweils einen Umschalter (U1 bis U4) angeschlossen sind, über dessen Schaltkontakte das jeweilige Empfangsgerät (R) wahlweise mit einem der LNB (L1 bis L4) verbindbar ist,
**dadurch gekennzeichnet,**
**daß** in jeder zu den LNB (L1 bis L4) führenden Leitungen ein steuerbarer Schalter (S1 bis S4) eingesetzt ist, über den die Betriebsspannung an das jeweilige LNB angelegt wird und der nur dann geschlossen ist, wenn wenigstens ein aktives Empfangsgerät (R) über einen Umschalter (U1 bis U4) mit diesem Schalter (S1 bis S4) elektrisch verbunden ist und die Schalteinrichtung (1) eine den Schaltzustand anzeigende Anzeigeeinrichtung aufweist.

2. Schalteinrichtung nach Anspruch 1, **dadurch gekennzeichnet, daß** der Schalter (S1 bis S4) über eine von dem Empfangsgerät (R) kommende Steuerspannung geschlossen wird.

3. Schalteinrichtung nach Anspruch 1, **dadurch gekennzeichnet, daß** der Schalter (S1 bis S4) über eine von einer die Stellung der Umschalter (U1 bis U4) erkennenden Auswerteeinrichtung betätigt wird.

4. Schalteinrichtung nach wenigstens einem der Ansprüche 1 bis 3, **dadurch gekennzeichnet, daß** jedem LNB (L1 bis L4) eine Anzeige (4 bis 7) zugeordnet ist, die anzeigt, ob an dem jeweiligen LNB die Betriebsspannung anliegt.

5. Schalteinrichtung nach einem der Ansprüche 1 bis 4, **dadurch gekennzeichnet, daß** jedem Umschalter (U1 bis U4) eine Anzeige (8 bis 11) zugeordnet ist, die das durch die Schalterstellung des Umschalters (U1 bis U4) mit dem Umschalter (U1 bis U4) verbundene LNB anzeigt.

6. Schalteinrichtung nach einem der Ansprüche 1 bis 5, **dadurch gekennzeichnet, daß** jedem LNB (L1 bis L4) eine Anzeige (LED1 bis LED4) zugeordnet ist, die anzeigt, welche Empfangsgeräte (R) auf das jeweilige LNB zugreifen.

7. Schalteinrichtung nach wenigstens einem der Ansprüche 1 bis 6, **dadurch gekennzeichnet, dass** jeder Umschalter (U1 bis U4) mit jeweils einer Anzeige (LED1 bis LED4) verbunden ist.

8. Schalteinrichtung nach Anspruch 7, **dadurch gekennzeichnet, dass** die Anzeige (LED1 bis LED4) mit einer Anzahl von LED's vorgesehen ist, die der Anzahl der Teilnehmer (T1 bis T4) entspricht.

## Claims

1. Switching device for satellite reception for the distribution of the IF signals, received by means of a plurality of LNBs, to receivers (R) of a plurality of subscribers (T1 to T4), in the case of which device the receivers (R) are each connected to a changeover switch (U1 to U4), via whose switching contacts the respective receiver (R) can be selectively connected to one of the LNBs (L1 to L4),
**characterised in that**
in each of the lines leading to the LNBs (L1 to L4) there is inserted a controllable switch (S1 to S4), via which the operating voltage is applied to the respective LNB and which is only closed when at least one active receiver (R) is electrically connected to this switch (S1 to S4) via a changeover switch (U1 to U4), and the switching device (1) has an indicating device indicating the switching state.

2. Switching device according to Claim 1, **characterised in that** the switch (S1 to S4) is closed via a control voltage coming from the receiver (R).

3. Switching device according to Claim 1, **characterised in that** the switch (S1 to S4) is actuated via an evaluating device which detects the position of the changeover switches (U1 to U4).

4. Switching device according to at least one of Claims 1 to 3, **characterised in that** each LNB (L1 to L4) is assigned an indicator (4 to 7) which indicates whether the operating voltage is applied to the respective LNB.

5. Switching device according to one of Claims 1 to 4, **characterised in that** each changeover switch (U1 to U4) is assigned an indicator (8 to 11) which indicates the LNB connected to the changeover switch (U1 to U4) by the switch position of the changeover switch (U1 to U4).

6. Switching device according to one of Claims 1 to 5, **characterised in that** each LNB (L1 to L4) is assigned an indicator (LED1 to LED4) which indicates which receivers (R) access the respective LNB.

7. Switching device according to at least one of Claims 1 to 6, **characterised in that** each changeover switch (U1 to U4) is connected to a respective indicator (LED1 to LED4).

8. Switching device according to Claim 7, **characterised in that** the indicator (LED1 to LED4) is provided with a number of LEDs corresponding to the number of subscribers (T1 to T4).

## Revendications

1. Dispositif de commutation pour la réception de programmes de télédiffusion par satellite pour la distribution de signaux FI reçus à l'aide de plusieurs LNB vers des appareils récepteurs (R) de plusieurs abonnés (T1 à T4), dans lequel les appareils récepteurs (R) sont raccordés, chacun, à un commutateur (U1 à U4) par les contacts de commutation duquel l'appareil récepteur (R) respectif peut être connecté alternativement à l'un des LNB (L1 à L4),
**caractérisé par le fait que**
dans chacune des lignes conduisant aux LNB (L1 à L4) est placé un interrupteur commandable (S 1 à S4) par lequel la tension de fonctionnement est appliquée au LNB respectif et qui n'est fermé que lorsqu'au moins un appareil récepteur (R) actif est connecté électriquement, par l'intermédiaire d'un commutateur (U1 à U4), avec cet interrupteur (S1 à S4), et le dispositif de commutation (1) présente un dispositif d'affichage affichant l'état de commutation.

2. Dispositif de commutation selon la revendication 1, **caractérisé par le fait que** l'interrupteur (S1 à S4) est fermé par une tension de commande provenant de l'appareil récepteur (R).

3. Dispositif de commutation selon la revendication 1, **caractérisé par le fait que** l'interrupteur (S1 à S4) est actionné par un dispositif d'évaluation identifiant la position du commutateur (U1 à U4).

4. Dispositif de commutation selon au moins l'une des revendications 1 à 3, **caractérisé par le fait qu'**à chaque LNB (L1 à L4) est associé un dispositif d'affichage (4 à 7) qui indique si la tension de fonctionnement est présente au LNB respectif.

5. Dispositif de commutation selon l'une des revendications 1 à 4, **caractérisé par le fait qu'**à chaque commutateur (U1 à U4) est associé un dispositif d'affichage (8 à 11) qui affiche le LNB connecté au commutateur (U1 à U4) par la position du commutateur (U1 à U4).

6. Dispositif de commutation selon l'une des revendications 1 à 5, **caractérisé par le fait qu'**à chaque LNB (L1 à L4) est associé un dispositif d'affichage (LED1 à LED4) qui indique les appareils récepteurs (R) qui accèdent au LNB respectif.

7. Dispositif de commutation selon au moins l'une des revendications 1 à 6, **caractérisé par le fait que** chaque commutateur (U1 à U4) est relié à chaque fois un dispositif d'affichage (LED1 à LED4).

8. Dispositif de commutation selon la revendication 7, **caractérisé par le fait que** le dispositif d'affichage (LED1 à LED4) est pourvu d'un nombre de DEL qui correspond au nombre d'abonnés (T1 à T4).
